# EUROPÄISCHE PATENTSCHRIFT

(11) **EP 2 851 590 B1**
(45) Veröffentlichungstag und Bekanntmachung des Hinweises auf die Patenterteilung: **14.02.2018**
(21) Anmeldenummer: 14183314.5
(22) Anmeldetag: 03.09.2014
(51) Int. Cl.: F04B 39/10, F16K 15/10

(54) **Ventilplatte für Gaswechselventile**
Valve plate for gas exchange valves
Plaque de soupape pour des soupapes d'échange des gaz

(30) Priorität: 04.09.2013 AT 505472013
(43) Veröffentlichungstag der Anmeldung: 25.03.2015
(73) Patentinhaber: Hoerbiger Kompressortechnik Holding GmbH, 1220 Wien (AT)
(72) Erfinder: Spiegl, Bernhard, 1230 Wien (AT); Testori, Markus, 2020 Hollabrunn (AT); Fuxa, Uwe, 1110 Wien (AT)
(74) Vertreter: Patentanwälte Pinter & Weiss OG

(56) Entgegenhaltungen:
- EP-A1- 0 572 748
- WO-A1-01/51811
- DE-A1-102009 038 002
- DE-C- 692 442
- GB-A- 532 178
- US-A1- 2008 156 381

## Beschreibung

Die Erfindung betrifft eine Ventilplatte aus faserverstärktem Kunststoff für Gaswechselventile von Hubkolben-Kompressoren, mit zumindest zwei konzentrischen Dichtringen, die mittels profilierter Dichtflächen mit entsprechenden Sitzflächen am Ventilsitz zusammenarbeiten und über radiale Stege verbunden sind, wobei die Stege zwischen den Dichtringen über ihre gesamte radiale Erstreckung und auf beiden Seiten der Ventilplatte gegenüber der anschließenden Dicke der Dichtringe verdünnt ausgebildet sind.

Als Ein- und Auslassventile von Hubkolben-Kompressoren mit größeren Hubvolumina werden heutzutage meist Plattenventile mit einer größeren Anzahl von konzentrisch angeordneten Durchströmöffnungen verwendet, die entweder mittels einer einstückigen Ventilplatte aus Stahl oder Kunststoff abgedeckt werden oder aber mit einzelnen profilierten Ringen zusammenarbeiten. Während die einstückigen Ventilplatten zur Folge der zwangsweise gemeinsamen Bewegung aller Bereiche der Platte eine relativ gleichmäßige Belastung der beim Öffnen und Schließen stark beanspruchten Dicht- und Anschlagflächen ermöglichen, haben sie auch Nachteile hinsichtlich der Strömungsumlenkung und damit einhergehender Strömungsverluste zur Folge der meist nur eben zu realisierenden zusammenarbeiteten Dichtflächen. Ventile mit einzelnen Dichtringen können dagegen relativ einfach mit in Durchströmungsrichtung schräg stehenden Dichtflächen (als sogenannte profilierte Ringe) ausgebildet werden, was geringere Strömungsumlenkung und damit geringere Strömungsverluste ergibt.

Um maximale Effizienz bei geringen Hüben zu erreichen müssen derartige Plattenventile möglichst feingliedrig und damit im Falle von Einzelringen auch mit möglichst vielen Dichtringen ausgeführt werden, wobei aber mit der Anzahl der Ringe die Wahrscheinlichkeit für unvorhersagbare und chaotische Ventilbewegungen steigt. Dieses Problem verstärkt sich bei stark geschmierten Kompressoren noch durch das Ölkleben am Ventilsitz.

Profilierte Plattenventile mit Ventilplatten der eingangs genannten Art stellen eine Art Hybrid dar, mit den Vorteilen der einstückigen unprofilierten Ventilplatten (gemeinsame Bewegung) und den Vorteilen der einzelnen profilierten Dichtringe (Effizienz, Robustheit). Allerdings hat dieses Konzept auch einen gravierenden Nachteil. Aufgrund von unvermeidbaren minimalen Dimensionsabweichungen bei der Herstellung und unterschiedlichem Wärmedehnungsverhalten ergeben sich bei Dichtringen mit schrägen Sitzflächen zwangsweise immer kleine Spalte, die erst nach Anliegen des Schließdruckes durch Deformation des Ringes schließen. Dieses Eindichtverhalten ist neben der Größe der Abweichung der zusammenwirkenden Dichtflächen hauptsächlich von der Stülpsteifigkeit des Ringes abhängig. Bei profilierten Ventilplatten der genannten Art behindern aber die verbindenden radialen Stege die individuelle Deformation der Einzelringe wobei die Nachbarringe mit deren individueller Abweichung noch zusätzlich Einfluss nehmen können. Profilierte einstückige Ventilplatten aus Kunststoff sind aus diesem Grund bisher nur selten und für spezielle Anwendungen zum Einsatz gekommen.

WO 0151811 A1 vom 19. Juli 2001 offenbart eine Ventilplatte für Gaswechselventile, die aus faserverstärktem Kunststoff hergestellt sein kann, mit zwei konzentrischen Dichtringen, die mittels profilierter Dichtflächen mit entsprechenden Sitzflächen am Ventilsitz zusammenarbeiten und über radiale Stege verbunden sind, wobei die Stege zwischen den Dichtringen auf beiden Seiten der Ventilplatte gegenüber der anschließenden Dicke der Dichtringe verdünnt ausgebildet sein können.

DE 202609 C vom 17 März 1907 offenbart eine Ventilplatte mit zwei konzentrischen Dichtringen, die über radiale Stege miteinander verbunden sind.

DE 692442 C vom 19. Juni 1940 offenbart ein Plattenventil mit einer Ventilplatte, die konzentrische Dichtringe aufweist, wobei an der flachen Rückseite der Ventilplatte zylindrische Wendelfedern anliegen.

EP 0572748 A1 offenbart ein Ringventil mit einer Ventilplatte, die konzentrische Dichtringe aufweist, wobei an der Rückseite der Ventilplatte zentrierende und gegebenenfalls aufnehmende Noppen bzw. Vertiefungen für die Ventilfedern vorgesehen sind.

DE 102009038002 A1 offenbart eine flache Ventilplatte mit einer Vielzahl konzentrischer Dichtringe. Die Ventilplatte ist auf der dichtenden Seite gänzlich eben ausgebildet. Auf der dem Ventilsitz abgewandten Seite sind Vertiefungen zur Aufnahme von Ventilfedern in die Platte eingebracht. Die Vertiefungen sind jeweils mittig zwischen zwei Stegen auf der Rückfläche eines Dichtrings angeordnet.

Aufgabe der vorliegenden Erfindung ist es, Ventilplatten der eingangs genannten Art so zu verbessern, dass das Eindichtverhalten mit einfachen Mitteln dem von konzentrischen Einzelringen zumindest angenähert wird, wobei aber trotzdem die Vorteile der einstückigen Ventilplatte hinsichtlich der gemeinsamen Bewegung aller Dichtringe beibehalten werden.

Diese Aufgabe wird bei einer Ventilplatte der eingangs genannten Art dadurch gelöst, dass zumindest einzelne der Bereiche der reduzierten Dicke der Stege auf der den Dichtflächen abgewandten Rückseite der Ventilplatte zur Aufnahme und vorzugsweise auch zur Zentrierung von Ventilfedern ausgebildet sind. Die Stege als relativ starre Verbindung zwischen den einzelnen Dichtringen sind hochbeansprucht. Neben Kräften bei der Abhebung der Ventilplatte vom Ventilsitz müssen während des Betriebes hohe dynamische Kräfte zur Aufrechterhaltung der gemeinsamen Bewegung der Ventilplatte übertragen werden. Besonders bei ungleichmäßigem Ölkleben an den zusammenwirkenden profilierten Dichtflächen müssen relativ hohe Losbrechkräfte übertragen werden, welche als Schub- und Biegekräfte über die radialen Stege von einem Ring zu seinen Nachbarn übertragen werden müssen. Eine möglichst große Dicke der Stege wäre hier von Vorteil. Es hat sich nun überraschenderweise herausgestellt, dass eine das Eindichten besonders negativ behindernde große Dicke der Stege gar nicht erforderlich ist sondern im Gegenteil auch mit einer Verdünnung der Stege gegenüber den einzelnen Dichtringen das Auslangen gefunden werden kann womit auf sehr vorteilhafte Weise eine gezielte Flexibilisierung erfolgt, die trotz ausreichender verbleibender Steifigkeit der gesamten Ventilplatte das Eindichtverhalten dramatisch verbessert. Durch das Vorsehen der Aufnahmen und gegebenenfalls Zentrierungen für die Ventilfedern können die Bereiche der Verdünnungen gleichzeitig auch eine zweite Funktion erfüllen, was den Aufbau des gesamten Ventils vereinfacht. Die Ausbildung von Vertiefungen zur Aufnahme von Ventilfedern im Bereich der Verbindungsstege der konzentrischen Dichtringe einer Ventilplatte aus Kunststoff ist dabei an sich beispielsweise aus der EP 572748B1 bekannt, wobei dort allerdings die einzelnen Dichtringe selbst nicht profiliert sind sondern mit ebenen Dichtflächen ausgeführt sind und auch mit ebenen Dichtflächen am Ventilsitz zusammenarbeiten. Weiters ist dort die Ausnehmung zur Aufnahme der Ventilfedern nur im mittleren Bereich des ansonsten gleichdick wie die Dichtringe ausgeführten Steges ausgespart, was aufgrund der damit einhergehenden örtlichen Schwächung des Stegquerschnittes zu hohen Belastungsspitzen in der Umgebung der Ausnehmung und zur Gefahr von Stegbrüchen in diesem Bereich führt. Demgegenüber ist gemäß der vorliegenden Erfindung jeweils der gesamte Bereich der reduzierten Dicke des Steges zur Aufnahme der Ventilfeder ausgebildet, was die Flexibilität des Steges nicht behindert und höhere Belastungen in den anschließenden dickeren Dichtring verlagert.

Zumindest einzelne der Bereiche der reduzierten Dicke der Stege können in weiterer Ausgestaltung der Erfindung auf der Rückseite der Ventilplatte zumindest einseitig in die anschließenden Dichtringe hinein erweitert sein, was eine weitere Möglichkeit zur Verbesserung der Flexibilität in diesem Bereich bietet ohne negative Auswirkungen hinsichtlich der dort auftretenden Belastungen.

In weiterer Ausgestaltung der Erfindung können die Bereiche der reduzierten Dicke der Stege auf der Rückseite der Ventilplatte auch durchgehend über die gesamte radiale Erstreckung der Dichtplatte in diesem Bereich sein, was die Flexibilität der gesamten Ventilplatte weiter verbessert.

Die Dicke der Stege beträgt in weiterer vorteilhafter Ausgestaltung der Erfindung 40 bis 70%, vorzugsweise 50 bis 60%, der Dicke der Dichtringe, wobei die Dicke der Stege vorzugsweise auf beiden Seiten der Ventilplatte zumindest annähernd symmetrisch, vorzugsweise nicht mehr als 10% von der Symmetrie abweichend, gegenüber den Dichtringen reduziert ist. Diese Ausgestaltungen haben sich als optimaler Kompromiss zwischen Verbesserung der Flexibilität und Beibehaltung einer für die gemeinsame Bewegung der konzentrischen Dichtringe erforderlichen Steifigkeit bewährt.

Im Bereich der Aufnahme der Ventilfedern können gemäß einer weiteren Ausgestaltung der Erfindung Erhebungen zur inneren Zentrierung der Ventilfedern vorgesehen sein, wie sie beispielsweise ebenfalls an sich aus der bereits genannten EP 572748B1 bekannt sind. Diese Erhebungen können zusätzlich zu den Ausbildungen der Bereiche der reduzierten Dicke der Stege zur Zentrierung Verwendung finden.

Die Erfindung wird im Folgenden anhand der in der Zeichnung teilweise schematisch dargestellten Ausführungsbeispiele näher erläutert. Fig. 1 zeigt dabei einen teilweisen Schnitt durch eine geometrisch optimal dichtende profilierte Ventilplatte (theoretische Annahme) am zugehörigen Ventilsitz, Fig. 2 und 3 zeigen entsprechende Schnitte durch üblicherweise tatsächlich real existierende Ventilplatten in unterschiedlichen Belastungszuständen, Fig. 4 zeigt eine Ventilplatte nach der vorliegenden Erfindung in geschlossenem, eingedichtetem Zustand und die Fig. 5 bis 7 zeigen perspektivische Ausschnitte aus weiteren Ausführungen nach der vorliegenden Erfindung.

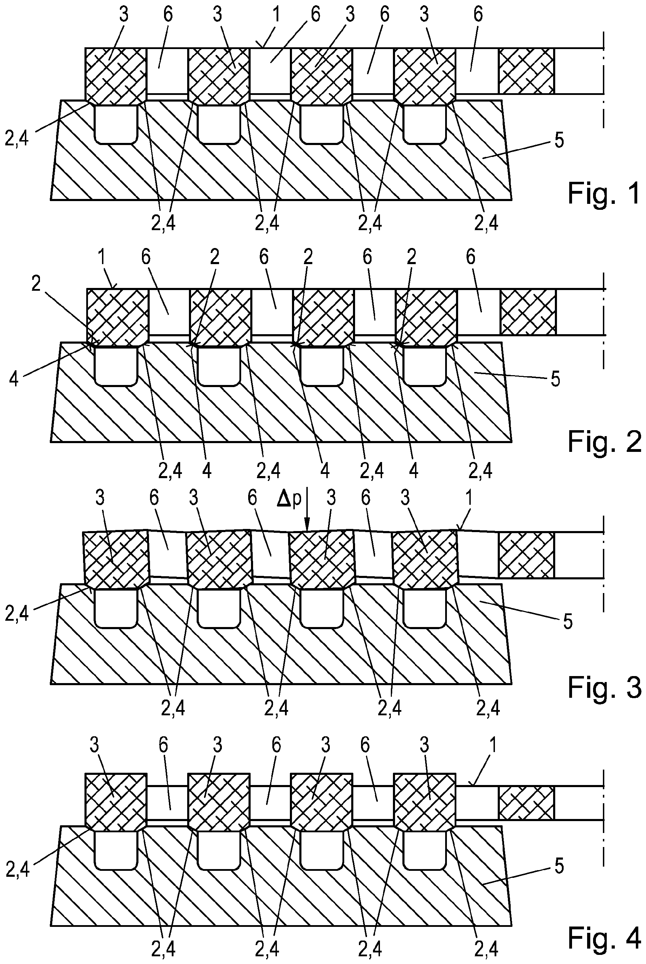

Gemäß Fig. 1 sind bei einer theoretisch angenommenen Ventilplatte 1 gemäß dem Stand der Technik alle profilierten Dichtflächen 2 an den dargestellten vier konzentrischen Dichtringen 3 in geometrisch optimal dichtender Zusammenwirkung mit den entsprechend profilierten Sitzflächen 4 am Ventilsitz 5, was zu einer optimalen Dichtheit des Ventils führt, ohne dass sich die aus faserverstärktem Kunststoff bestehende Ventilplatte 1 bzw. deren konzentrische Dichtringe 3 in irgendeiner Weise gegenüber dem üblicherweise aus Metall bestehenden Ventilsitz 5 bzw. den Sitzflächen 4 bewegen oder an diesen anpassen müsste.

Es ist einsichtig, dass diese theoretische Annahme in Wirklichkeit nicht zu halten ist - in der Realität sieht eine Ventilplatte gemäß bisher bekannter Ausgestaltung so aus wie in den Fig. 2 und 3 angedeutet. Die einzelnen Dichtflächen 2 der Dichtringe 3 wirken nur zufällig und bereichsweise unmittelbar abdichtend mit den zugehörigen Sitzflächen 4 am Ventilsitz 5 zusammen solange gemäß Darstellung in Fig. 2 keine separaten Kräfte auf die einzelnen zusammenwirkenden Elemente ausgeübt werden. Derartige separate Kräfte entstehen gemäß Fig. 3 durch den beim Schließen wirkenden Differenzdruck Δp, der bewirkt, dass sich die einzelnen Dichtringe 3 bereichsweise einstülpen und zwar gegen ihre eigene und die Steifigkeit der dazwischen angeordneten Verbindungsstege 6.

Nachdem die relativ starren radialen Stage 6 zur Verbindung der einzelnen konzentrischen Dichtringe 3 die Stülpsteifigkeit der einzelnen Dichtringe 3 maßgeblich behindern wird auch das Eindichtverhalten der einzelnen Dichtringe 3 negativ beeinflusst und unter Umständen auch ganz verhindert. Dies führt zu einer Funktionsbeeinträchtigung der Ventile und auch zu erhöhter Abnutzung der Dichtflächen 2.

Bei der Ausführung nach Fig. 4 ist nun erfindungsgemäß vorgesehen, dass die Stege 6 zwischen den Dichtringen 3 über ihre gesamte radiale Erstreckung und auf beiden Seiten der Ventilplatte 1 gegenüber der anschließenden Dicke der Dichtringe 3 verdünnt ausgebildet sind, wobei die Dicke der Stege 6 hier etwa 60% der Dicke der Dichtringe 3 beträgt und die Reduzierung auf beiden Seiten der Ventilplatte 1 zumindest annähernd symmetrisch ist. Es entsteht damit ein thermosymmetrischer Aufbau, wobei das Ausmaß der Querschnittsreduktion einen optimalen Kompromiss zwischen gezielter Flexibilisierung und verbleibender Steifigkeit der Ventilplatte 1 anstrebt.

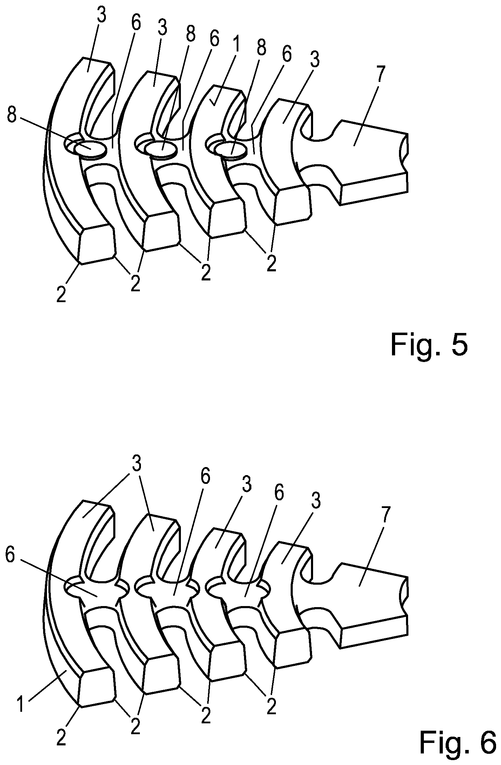

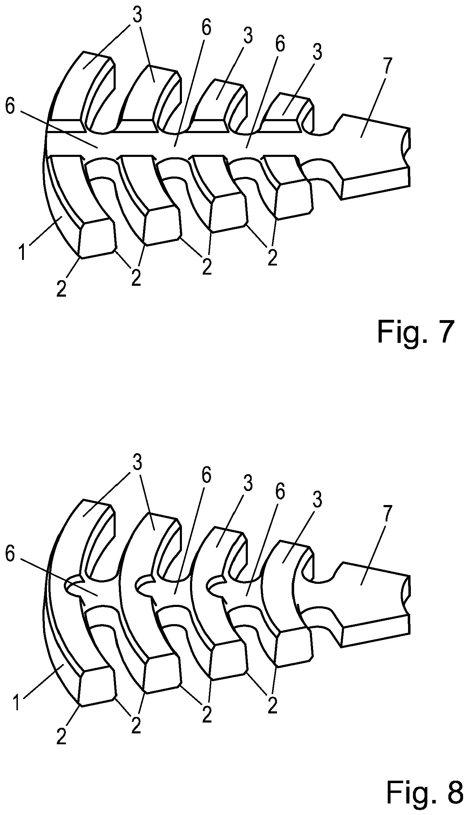

Bei der Ventilplatte 1 nach den Fig. 5, 6 und 8 sind zumindest einzelne der Bereiche der reduzierten Dicke der Stege 6 auf der den Dichtflächen 2 abgewandten Rückseite 7 der Ventilplatte 1 zur Aufnahme und vorzugsweise auch Zentrierung von hier nicht weiter dargestellten Ventilfedern ausgebildet, welche damit relativ zur Ventilplatte 1 festgelegt sind. Bei der Ausführung nach den Fig. 5 und 8 ist dazu jeweils der Bereich der reduzierten Dicke der Stege 6 auf der Rückseite 7 der Ventilplatte 1 einseitig in die anschließenden Dichtringe 3 hinein erweitert. Bei der Ausführung nach Fig. 6 erfolgt die Erweiterung jeweils beidseitig in die Dichtringe 3 hinein.

Bei der Ausführung nach Fig. 5 ist im Bereich der Aufnahme der nicht dargestellten Ventilfedern jeweils eine scheibenförmige Erhebung 8 zur inneren Zentrierung der Ventilfedern vorgesehen, was die Festlegung der Federenden verbessert.

Bei der Ausführung nach Fig. 7 sind die Bereiche der reduzierten Dicke der Stege 6 auf der Rückseite 7 der Ventilplatte 1 durchgehend über die gesamte radiale Erstreckung der Dichtplatte 1 in diesem Bereich ausgeführt, was eine erweiterte Möglichkeit zur Verbesserung der Flexibilität der Ventilplatte (1) bietet.

## Patentansprüche

1. Ventilplatte (1) aus faserverstärktem Kunststoff für Gaswechselventile von Hubkolben-Kompressoren, mit zumindest zwei konzentrischen Dichtringen (3), die mittels profilierter Dichtflächen (2) mit entsprechenden Sitzflächen (4) am Ventilsitz (5) zusammenarbeiten und über radiale Stege (6) verbunden sind, wobei die Stege (6) zwischen den Dichtringen (3) über ihre gesamte radiale Erstreckung und auf beiden Seiten der Ventilplatte (1) gegenüber der anschließenden Dicke der Dichtringe (3) verdünnt ausgebildet sind, **dadurch gekennzeichnet, dass** zumindest in einzelnen der Bereiche der reduzierten Dicke der Stege (6) auf der den Dichtflächen (2) abgewandten Rückseite (7) der Ventilplatte (1) Aufnahmen und vorzugsweise Zentrierungen für die Ventilfedern ausgebildet sind.

2. Ventilplatte nach Anspruch 1, **dadurch gekennzeichnet, dass** zumindest einzelne der Bereiche der reduzierten Dicke der Stege (6) auf der Rückseite (7) der Ventilplatte (1) zumindest einseitig in die anschließenden Dichtringe (3) hinein erweitert sind.

3. Ventilplatte nach Anspruch 1, **dadurch gekennzeichnet, dass** die Bereiche der reduzierten Dicke der Stege (6) auf der Rückseite (7) der Ventilplatte (1) durchgehend über die gesamte radiale Erstreckung der Dichtplatte (1) in diesem Bereich sind.

4. Ventilplatte nach einem der Ansprüche 1 bis 3, **dadurch gekennzeichnet, dass** die Dicke der Stege (6) 40-70%, vorzugsweise 50-60%, der Dicke der Dichtringe (3) beträgt.

5. Ventilplatte nach einem der Ansprüche 1 bis 4, **dadurch gekennzeichnet, dass** die Dicke der Stege (6) auf beiden Seiten der Ventilplatte (1) zumindest annähernd symmetrisch, vorzugsweise nicht mehr als 10% von der Symmetrie abweichend, gegenüber den Dichtringen (3) reduziert ist.

6. Ventilplatte nach einem der Ansprüche 1 bis 5, **dadurch gekennzeichnet, dass** im Bereich der Aufnahme der Ventilfedern Erhebungen (8) zur inneren Zentrierung der Ventilfedern vorgesehen sind.

## Claims

1. A valve plate (1) made of fiber-reinforced plastic for gas exchange valves of reciprocating piston compressors comprising at least two concentric sealing rings (3), that cooperate with corresponding seating surfaces (4) at the valve seat (5) by way of profiled sealing surfaces (2) and that are connected by way of radial webs (6), wherein the webs (6) are designed to be thinner between the sealing rings (3) along the entire radial extent thereof and on both sides of the valve plate (1) compared to the adjacent thickness of the sealing rings (3), **characterized in that** holding means and preferably centering means for the valve springs are designed at least in some of the areas of reduced thickness of the webs (6) on the back side (7) of the valve plate (1) facing away from the sealing surfaces (2).

2. The valve plate according to claim 1, **characterized in that** at least some of the areas of reduced thickness of the webs (6) are expanded at least on one side into the adjacent seal rings (3) on the back side (7) of the valve plate (1).

3. The valve plate according to claim 1, **characterized in that** the areas of reduced thickness of the webs (6) on the back side (7) of the valve plate (1) are continuous over the entire radial extent of the sealing plate (1) in this area.

4. The valve plate according to one of claims 1 to 3, **characterized in that** the thickness of the webs (6) is 40-70%, preferably 50-60%, of the thickness of the sealing rings (3).

5. The valve plate according to one of claims 1 to 4, **characterized in that** the thickness of the webs (6) on both sides of the valve plate (1) are reduced at least approximately symmetrically, preferably deviating by not more than 10% from symmetric, in comparison to the sealing rings (3).

6. The valve plate according to one of claims 1 to 5, **characterized in that** raised areas (8) are provided in the area where the valve springs are held in order to provide centering of the valve springs.

## Revendications

1. Plateau de soupape (1) en matière plastique renforcée par des fibres pour des soupapes d'échange de gaz de compresseurs à piston alternatif, comportant au moins deux bagues d'étanchéité concentriques (3) qui coopèrent par des surfaces d'étanchéité profilées (2) avec des surfaces d'assise correspondantes (4) au niveau du siège de soupape (5) et sont raccordées par des traverses radiales (6), les traverses (6) ayant une conformation amincie entre les bagues d'étanchéité (3) sur toute leur extension radiale et sur les deux côtés du plateau de soupape (1) par rapport à l'épaisseur suivante des bagues d'étanchéité (3), **caractérisé en ce que, au** moins dans certaines des zones d'épaisseur réduite **des traverses (6), sur** la face arrière (7) détournée des surfaces d'étanchéité (2) du plateau de soupape (1), des supports et de préférence des centrages pour les ressorts de soupape sont réalisés.

2. Plateau de soupape selon la revendication 1, **caractérisé en ce qu'**au moins certaines des zones d'épaisseur réduite des traverses (6) sur la face arrière (7) du plateau de soupape (1) sont élargies du moins d'un côté jusque dans les bagues d'étanchéité suivantes (3).

3. Plateau de soupape selon la revendication 1, **caractérisé en ce que** les zones d'épaisseur réduite des traverses (6) sont continues sur la face arrière (7) du plateau de soupape (1) sur toute l'extension radiale de la plaque d'étanchéité (1) dans cette zone.

4. Plateau de soupape selon l'une quelconque des revendications 1 à 3, **caractérisé en ce que** l'épaisseur des traverses (6) représente 40 à 70%, de préférence 50 à 60%, de l'épaisseur des bagues d'étanchéité (3).

5. Plateau de soupape selon l'une quelconque des revendications 1 à 4, **caractérisé en ce que** l'épaisseur des traverses (6) des deux côtés du plateau de soupape (1) est réduite du moins approximativement de manière symétrique, de préférence en divergeant de pas plus de 10% de la symétrie, par rapport aux bagues d'étanchéité (3).

6. Plateau de soupape selon l'une quelconque des revendications 1 à 5, **caractérisé en ce que,** au niveau du support des ressorts de soupape, des proéminences (8) sont prévues pour le centrage interne des ressorts de soupape.
